# EUROPÄISCHE PATENTANMELDUNG

(11) **EP 0 595 199 A1**
(43) Veröffentlichungstag der Anmeldung: **04.05.1994**
(21) Anmeldenummer: 93117063.3
(22) Anmeldetag: 21.10.1993
(51) Int. Cl.: B29C 45/17, B23Q 1/00

(54) **Kunststoff-Spritzgiessmachine**

(30) Priorität: 27.10.1992 DE 4236147
(71) Anmelder: Hehl, Karl, D-72290 Lossburg (DE)
(72) Erfinder: Hehl, Karl, D-72290 Lossburg (DE)
(74) Vertreter: Frank, Gerhard, Dipl.-Phys.

(57) **Zusammenfassung**

An einer Kunststoff-Spritzgießmaschine wird an einem Schaltschrank (11) eine zumindest Datensichtgerät (12) und Eingabetastatur (13) umfassende Eingabeeinheit (E) um eine vertikale Achse schwenkbar angeordnet, die in eine Stellung überführbar ist, in der sie den der Spritzgießmaschine zugeordneten Schaltschrank im wesentlichen nicht nach vorne überragt. Der Schaltschrank ist dabei in Wenigstens zwei miteinander verbundene Segmente (11a, 11b) aufgegliedert. Dadurch wird eine platzsparende Kombination von Schaltschrank und Eingabeeinheit geschaffen, ohne die Lebendauer und Wartungsmöglichkeit des Schaltschrankes zu beeinträchtigen.

## Beschreibung

Die Erfindung betrifft eine Kunststoff-Spritzgießmaschine (Spritzgießmaschine) nach dem Oberbegriff des Anspruches 1.

Derartige Spritzgießmaschinen sind aus der EP-OS 264 601 oder EP-OS 336 249 bekannt. Dabei ist der vom Datensichtgerät und von der Eingabetastatur räumlich getrennte Schaltschrank entweder in geringfügigem Abstand von der Spritzgießmaschine an deren spritzgießseitiger Stirnseite derart angeordnet, daß seine vordere Breitseite bündig ist mit der Bedienungslängsseite des Maschinengestells oder der Schaltschrank ist an der Rückseite der Spritzgießmaschine freitragend angebaut. Die aus Datensichtgerät und Eingabetastatur bestehende Eingabeeinheit ist schwenkbar an der Spritzgießmaschine angeordnet und kann in eine Ruheposition überführt werden, in der sie keinen zusätzlichen Raum vor der Maschine benötigt. Während bei der EP-OS 264 601 die Möglichkeit besteht, daß sich Bedienungs- oder Wartungspersonal verletzt, da sich die Eingabeeinheit in ausgeschwenkter Stellung weitgehend dem Blickbereich des Personal entzieht, wird diese Gefahr bei der EP-OS 336 249 durch einen entsprechenden Aufbau der schwenkbaren Eingabeeinheit verhindert. Grundsätzlich können beide Schaltschränke in der Fertigung für sich an Probemaschinen angeschlossen oder über Simulationen getestet werden, so daß sie als vollständige Einheiten der Spritzgießmaschine zugeführt werden können. Zwar lassen sich bereits dadurch die Fertigungskosten reduzieren, jedoch muß stets eine lange Kabelverbindung zu der getrennt vom Schaltschrank angeordneten Eingabeeinheit geführt werden. Aus Sicherheitsgründen ist dabei der Schaltschrank nur dann zugänglich, wenn der Strom vollständig abgeschaltet ist, so daß auch eine Wartung von Schwachstrom führenden Bauteilen nur mit Mühe möglich ist.

In der EP-OS 349 807 wird ein Schaltschrank vor der Spritzgießmaschine angeordnet, in den das Datensichtgerät eingebaut ist. Zwar ist ein Verletzungsrisiko durch den Einbau des Datensichtgeräts in den Schaltschrank ausgeschlossen, jedoch erschwert die winkelige Anordnung zwischen Eingabeeinheit und Spritzgießmaschine die Möglichkeit der Bedienungsperson, Datensichtgerät und Spritzgießmaschine gleichzeitig im Auge zu behalten.

Allen bisher angeführten Vorrichtungen ist gemeinsam, daß die Bedientastatur in einer Höhe angeordnet ist, die lediglich eine vertikale Anordnung der Bedientastatur ermöglicht, um die Daten einzugeben. Sowohl zur Verhindung von Reflektionen am Datensichtgerät als auch zur bequemen Bedienung der Tastatur ist es aber aus ergonomischen Gesichtspunkten erwünscht, die Eingabeeinheit in einer niedrigeren Höhe anzuordnen.

Schließlich ist es aus dem Firmenprospekt der Firma Cincinnati Milacron "T-Line Toggle Injection Molding Machines" bekannt, einen Schaltschrank vor einer Spritzgießmaschine anzuordnen und keine gesonderte Eingabeinheit vorzusehen. Bei diesem Schaltschrank handelt es sich trotz des auf den ersten Blick anders erscheinenden Äußeren um einen einzigen Schaltschrank mit zwei Türen (Seite 5, links oben).

Ausgehend von diesem Stand der Technik liegt der Erfindung die Aufgabe zugrunde, an einer Spritzgießmaschine der eingang genannten Gattung eine platzsparende Kombination von Schaltschrank und Eingabeeinheit zu schaffen, ohne Lebensdauer und Wartungsmöglichkeit des Schaltschrankes zu beeinträchtigen.

Diese Aufgabe wird durch die Kombination der Merkmale des Anspruches 1 gelöst.

Dadurch kann zunächst die Kombination von Schaltschrank und Eingabeeinheit in der Fertigung gemeinsam beispielsweise über Simulationen getestet werden, so daß sie nur noch als vollständige Einheiten der Spritzgießmaschine zugeführt werden können. Dennoch kann die Einheit auf einfachste Weise wieder aufgelöst werden, da lediglich die mechanischen und elektrischen Verbindungen der Eingabeeinheit zum Schaltschrank unterbrochen werden müssen.

Die Zergliederung des Schaltschrankes in wenigstens zwei miteinander verbundene Segmente hat den Vorteil, daß durch die Befestigung der üblicherweise das Datensichtgerät mit Bildschirm und die Eingabetastatur in einem Gehäuse umfassenden Eingabeeinheit trotz ihres nicht zu vernachlässigenden Gewichtes nicht zu Schäden am Schaltschrank führt, da dieser aufgrund seiner Zergliederung steifer ausgebildet ist als ein üblicher Schaltschrank. Kleinere Segmente können aber auch in ferne Länder leichter transportiert werden und bei einer entsprechenden Aufteilung der Elektronik im Schaltschrank können bedarfsweise störanfälligere Teile auf einfache Weise dadurch ausgetauscht werden, daß das betreffende Segment mitsamt den jeweiligen Bauteilen durch ein neues ersetzt wird. Durch die Kombination wird aber auch die Kabelverbindung zwischen Eingabeeinheit und Schaltschrank verkürzt. Alle diese Punkte tragen aber dazu bei, daß sowohl Herstellung als auch Betrieb und Wartung der Maschine günstiger durchgeführt werden können als bisher. Die Zergliederung des Schaltschrankes ermöglicht, Schaltschränke aus identischen Elementen, je nach den Wünschen und Vorstellungen des Benutzers oder ganz nach den vor Ort vorgefundenen Verhältnissen vertikal oder horizontal anzuordnen.

Werden entsprechend Anspruch 3 Schwachstrom und Starkstrom führende Bauteile in jeweils verschiedenen Segmenten des Schaltschrankes vorgesehen, kann erhöhten Sicherheitsvorschriften dadurch genügt werden, daß zwar die Starkstrom führenden Bauteile nur bei Aufhebung der Stromverbindung zugänglich sind, während die in einem gesonderten Schranksegment angeordneten Schwachstrom führenden Bauteile jederzeit zugänglich und somit auch unter niedriger Spannung stehend einer Wartung zugänglich sind.

Weitere Vorteile ergeben sich aus den Unteransprüchen. Im folgenden wird ein Ausführungsbeispiel der Erfindung anhand der beigefügten Zeichnungen erläutert. Es zeigen:
- Fig. 1: eine Ansicht der Spritzgießmaschine,
- Fig. 2: eine Draufsicht auf die Spritzgießmaschine gemäß Fig. 1,
- Fig. 3: eine stirnseitige Ansicht der Spritzgießmaschine gemäß Fig. 1 aus Richtung der Formschließeinheit,
- Fig. 4: einen aufrecht stehenden Schaltschrank in einer Vorderansicht, bestehend aus zwei übereinander angeordneten Segmenten,

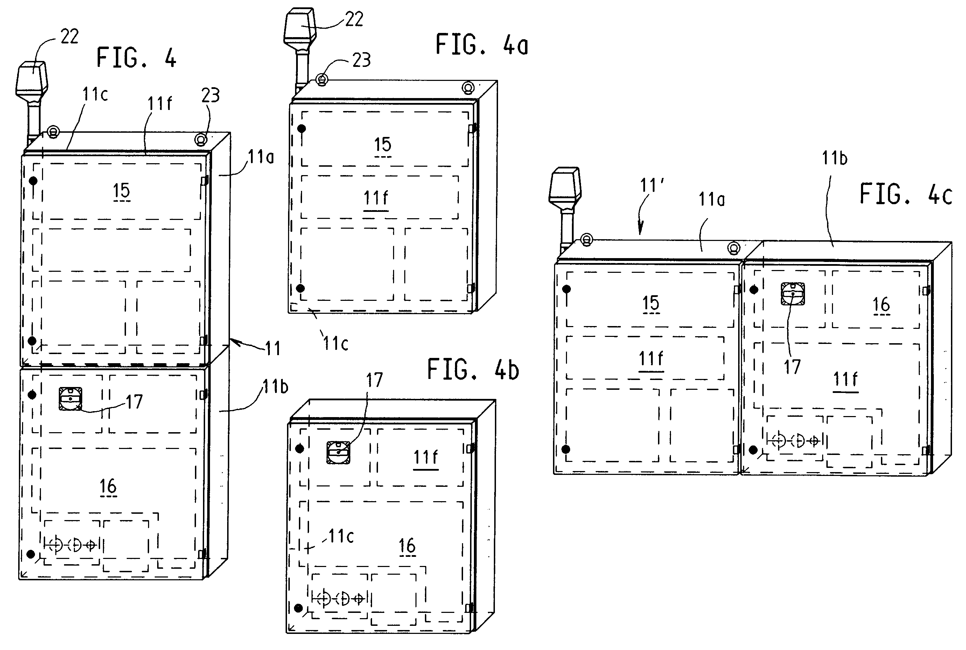

- Fig.4 a,b: das obere und untere Segment des Schaltschrankes gemäß Fig. 4,
- Fig.4 c: eine Ansicht eines Schaltschrankes gemäß Fig. 4, wobei die Segmente des Schaltschrankes nebeneinander angeordnet sind,

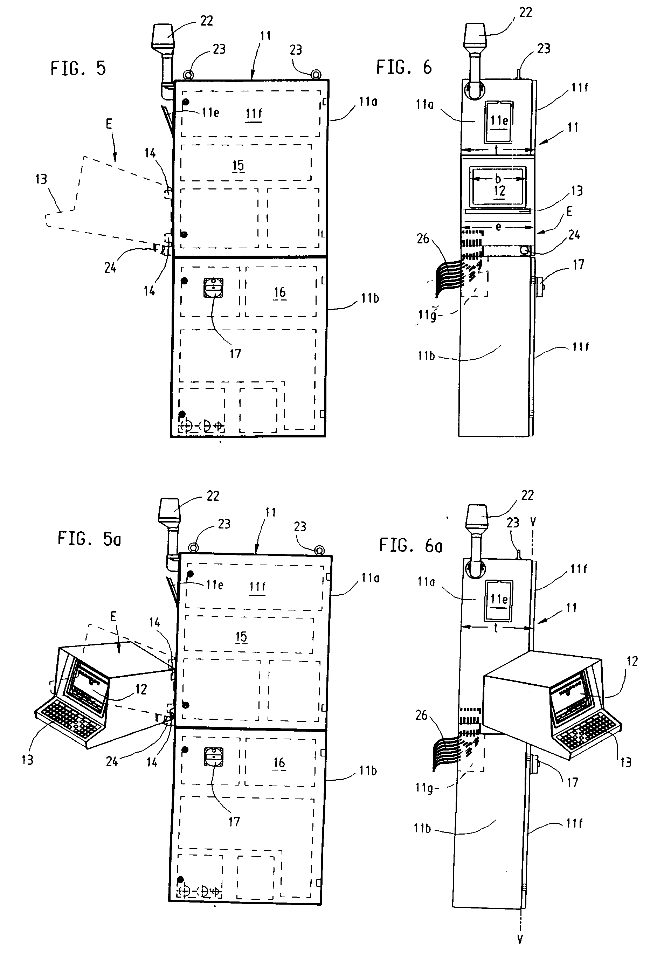

- Fig. 5, 6: eine Vorder- und Seitenansicht des Schaltschrankes aus Richtung der Formschließeinheit gemäß Fig. 4 mit eingeschwenkter Eingabeeinheit,
- Fig. 5a, 6a: Ansichten des Schaltschrankes gemäß Fig. 5, 6 mit seitlich verschwenkter Eingabeeinheit,

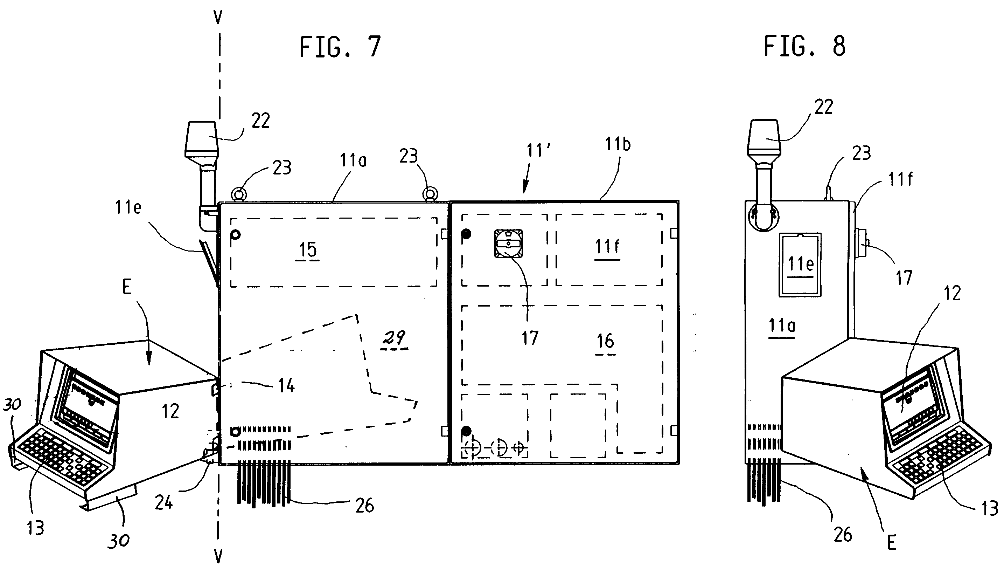

- Fig. 7, 8: Vorder- und Seitenansicht eines Schaltschrankes gemäß Fig. 4c mit angebauter verschwenkter Eingabeeinheit.

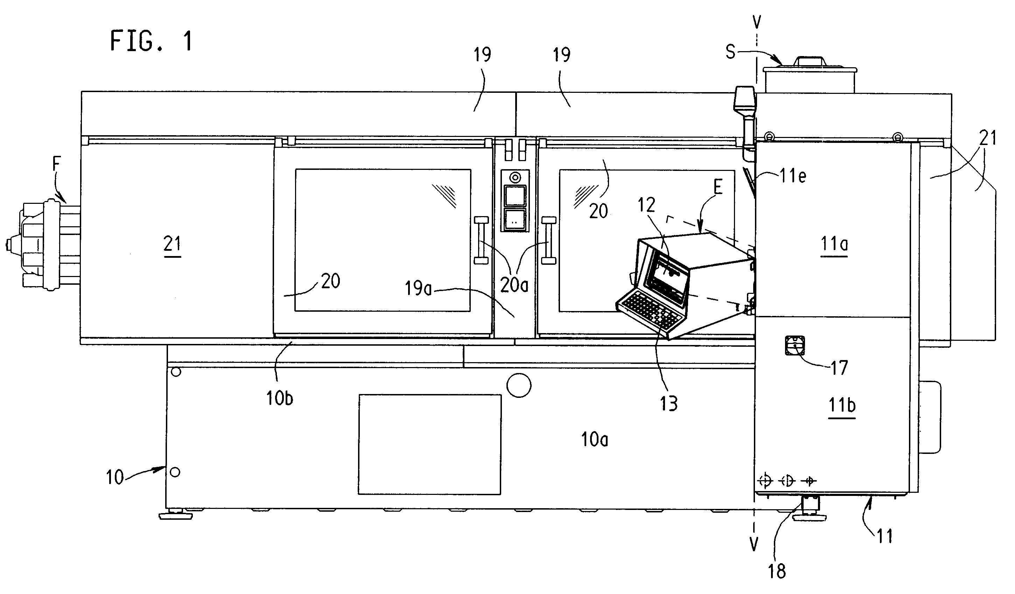

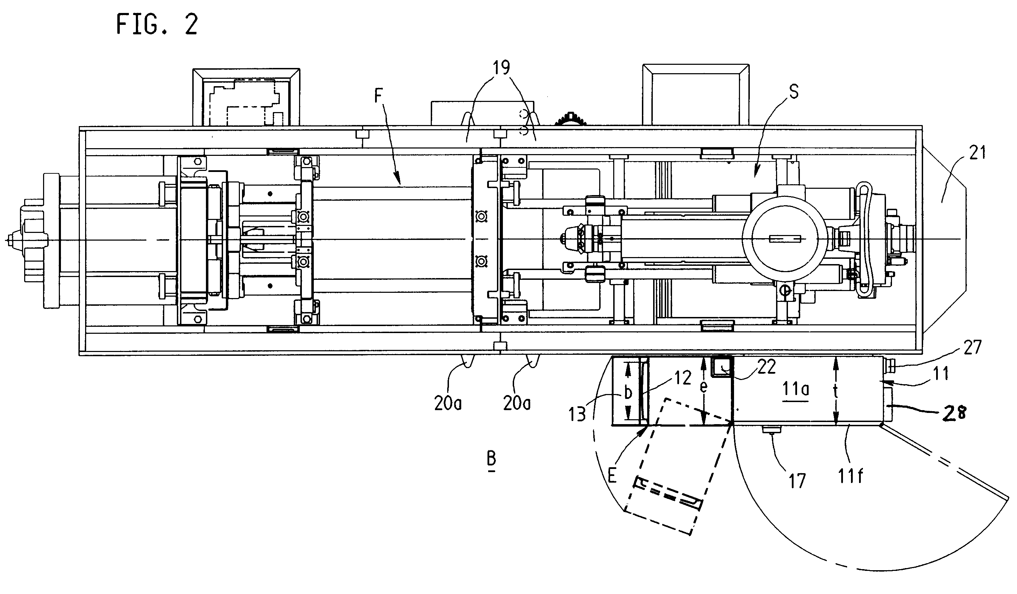

Aus Fig. 1 ergibt sich zunächst der grundlegende Aufbau der Spritzgießmaschine. Auf einem Maschinenfuß 10 befindet sich eine Formschließeinheit F und eine Spritzgießeinheit S. Zur Abdeckung von Gefahrenbereichen sind Schutzschieber 20 vorgesehen, die an einer Tragkonstruktion 19 verschiebbar angeordnet sind, die über eine Trägersäule 19a und Schutzabdeckungen 21 mit der Abdeckung 10b des Maschinenfußes 10 in Verbindung steht. Im Bereich der Spritzgießeinheit S ist ein Schaltschrank 11 vorgesehen, der mit einer Eingabeeinheit über Kabel 24 verbunden ist, die in einem Gehäuse Datensichtgerät 12 und Eingabetastatur 13 umfaßt. Die Eingabeeinheit E ist um wenigestens eine vertikale Schwenkachse v-v schwenkbar angeordnet und von einem vor der Spritzgießmaschine liegenden Bedienungsplatz B (Fig. 2) zugänglich. Bedarfsweise können an der Eingabeeinheit auch noch weitere Schwenkachsen oder Schwenkgelenke vorgesehen sein, die eine Verschwenkung der Eingabeeinheit um weitere Achsen ermöglichen.

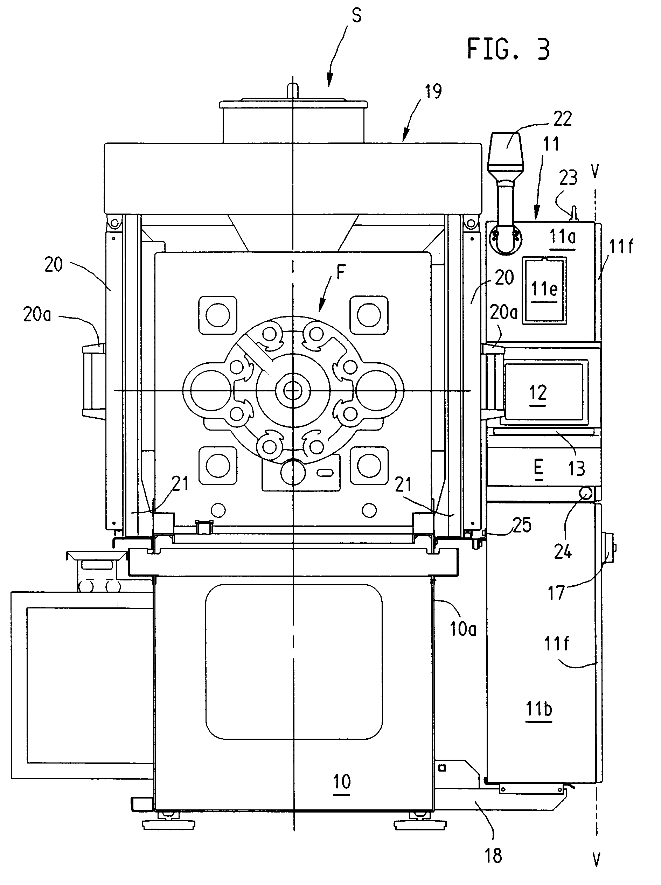

Die Eingabeeinheit ist in eine Stellung überführbar, in der sie in einer Ansicht gemäß Fig. 3 mit der vorderseitigen Wandung des Schaltschrankes 11 abschließt. In dieser Stellung überragt sie die Spritzgießmaschine bzw. den der Spritzgießmaschine zugeordneten Schaltschrank nicht nach vorne. Der Schaltschrank 11 ist im Anschlußbereich der Eingabeeinheit E dadurch ausgesteift, daß er in wenigstens zwei miteinander verbundene Segmente 11a und 11b aufgegliedert ist. Die beiden Schranksegmente 11a, 11b besitzen identische Abmessungen und in der Frontansicht quadratische Gestalt. Dadurch können mit diesen Segmenten sowohl vertikal stehende als auch horizontal liegende Schaltschränke gemäß den Fig. 4, 4c gebildet werden. Die Segmente ermöglichen aber auch, Lagerhaltungskosten und Transportkosten, insbesondere in entfernte Länder allein aufgrund ihrer Außenabmessungen, zu verringern.

Wie aus Fig. 2 ersichtlich läßt sich die Eingabeeinheit E aus einer Stellung in der sie mit dem Schaltschrank fluchtet in eine in den Bedienungsplatz B hineinreichende Stellung überführen, die zugleich eine Sicht auf das Datensichtgerät als auch auf die Spritzgießmaschine erlaubt. Während aufgrund der Anordnung der Schwenkelemente 14 an der vorderen Kante des Schaltschrankes 11 die Schwenkbewegung in Richtung auf die Maschine durch die Wandung des Schaltschrankes begrenzt wird, kann in der anderen Richtung gemäß der gestrichelten Darstellung in Fig. 2 die Eingabeeinheit E beliebig verschwenkt werden. Auf der der Eingabeeinheit gegenüberliegenden Seite des Schaltsschrankes 11 ist ein Luftschacht 28 vorgesehen, der die beiden Segmente 11a, 11b des Schaltschrankes 11 miteinander verbindet. In der Vorderansicht werden durch den Luftschacht 28 die Stecker für Peripheriegeräte 27 verdeckt.

Aus den Fig. 4 bis 8 ergibt sich der grundsätzliche Aufbau des Schaltschrankes 11. Grundsätzlich besteht der Schaltschrank aus zwei Segmenten 11a, 11b, wobei das Segment 11a für die Aufnahme der Schwachstrom führenden Bauteile 15 und das Segment 11b für die Aufnahme der Starkstrom führenden Bauteile 16 vorgesehen ist. Zur Absicherung ist daher auch beim Segment 11b der Hauptschalter 17 der Maschine in den Schaltschrank eingebaut und nur nach Betätigung des Hauptschalters kann dieser Teil des Schaltschrankes 11 geöffnet werden. Dadurch ist es möglich, die Schwachstrom führenden Bauteile 15 zu warten, während sie unter Strom stehen. Für den Transport des Schaltschrankes sind Transportösen 23 vorgesehen und unmittelbar am Schaltschrank ist eine Warnlampe 22 angeordnet. Der Eingabeeinheit ist zum Aus- und Einlesen von Daten eine Diskettenstation zugeordnet, die über einen Diskettenschacht 11e zugänglich ist. Wie aus Fig. 4, 4a ersichtlich, befindet sich die Schwenkachse v-v, die durch die Schwenkelemente 14 gebildet wird, im Bereich von Versteifungselementen bzw. Versteifungskanten 11c des Schaltschrankes 11. Als Versteifungskanten dienen bspw. Umbördelungen der Bleche des Schaltschrankes, sowie die Eckbereiche, insbesondere des die Schwachstrom führenden Bauteile 15 beinhaltenden Segmentes 11a des Schaltschrankes 11. Der Schaltschrank ist durch zwei Türen 11f zugänglich, und besitzt in seinem hinteren Teil eine Aussparung 11g, über die die stromführenden Kabel vom Segment 11a zur Maschine geführt werden. Aus Fig. 3 in Verbindung mit Fig. 7 ergibt sich, daß sich das Datensichtgerät 12 der Eingabeeinheit E etwa in Höhe der Griffe 20a der Schutzschieber 20 befindet. Die Breite b des Datensichtgerätes bestimmt weitgehend die Größe der Eingabeeinheit. Diese Breite b ist geringfügig schmaler als die Breite der Eingabeeinheit E, die ihrerseits etwa der Tiefe t des Schaltschrankes 11 entspricht. Aus ergonomischen Gesichtspunkten empfiehlt sich diese Anordnung der Eingabeeinheit, die mit der rechten Hand beispielsweise eine Bedienung der Eingabeeinheit ermöglicht, während gleichzeitig, insbesondere von Wartungspersonal, mit der linken Hand Eingriffe an der Maschine vorgenommen werden können. In der Seitenansicht über der Eingabeeinheit E ist ein Diskettenschacht 11e angeordnet.

Gemäß Fig. 7 können die Schwenkelemente für das Verschwenken der Eingabeeinheit E so angeordnet werden, daß ein vollständiges Einschwenken der Eingabeeinheit in den Schaltschrank möglich ist. Zu diesem Zweck muß dann zwar im Schaltschrank ein entsprechender Freiraum 29 vorgesehen werden, jedoch ermöglicht diese Ausbildung einen Transportschutz des Datensichtgerätes durch die Tür 11f.

Die Zergliederung des Schaltschranks in mehrere Segmente 11a, 11b dient nicht nur der Trennung von Schwach- und Starkstrombereich, die je für sich unterschiedlichen Schutzanforderungen genügen müssen, sondern auch der Aussteifung des Schaltschrankes, insbesondere zur Befestigung der Eingabeeinheit. Aus Fig. 5 wird deutlich, daß die Last der Eingabeeinheit bei übereinanderangeordneten Segmenten gut auf die Verbindungsbereiche der beiden Segmente 11a, 11b übergeleitet werden kann. Dadurch wird aber Ermüdungserscheinungen des Materials im Bereich der Schwenkelemente entgegengewirkt.

Durch einen Vergleich der Fig. 1 und 3 wird die Befestigung des Schaltschrankes an der Spritzgießmaschine ersichtlich. Der Schaltschrank ist freitragend über Tragelemente 18 an der bedienungsseitigen Längswand des Maschinenfußes 10 abgestützt. Ergänzend ist der Schaltschrank über ein Halteelement 25 mit der Abdeckung des Maschinenfußes 10 verbunden. Grundsätzlich ist eine derartige freitragende Befestigung des Schaltschrankes nicht erforderlich, jedoch wird dadurch sowohl die Reinigung unter dem Schaltschrank als auch die Zugänglichkeit für die Wartung des Schaltschrankes aufgrund der angehobenen Höhe erleichtert. Auf jeden Fall muß bei der Ausbildung des Schaltschrankes mit der schwenkbaren Eingabeeinheit E sichergestellt sein, daß bei der Schwerpunktverschiebung infolge der in den Bedienungsbereich B hineingeschwenkten Eingabeeinheit E kein Kippen des Schaltschrankes auftreten kann.

Die Eingabetastatur ist eine mit Piktogrammen versehene Tastatur, wobei die Piktogramme mit auf dem Bildschirm erscheinenden Zeichen identisch sind. Die Tastatur besitzt zudem eine Doppelbelegung, über die auch Klartextmitteilungen eingegeben werden können. Falls jedoch der Benutzer derartige Textnachrichten in größerem Umfang eingeben will, sollte eine gesonderte, einer Schreibmaschinentastatur entsprechende Tastatur vorhanden sein. Die Eingabetastatur kann einfach durch eine Schreibmaschinentastatur ersetzt werden. Dazu ist die Eingabetastatur durch Steckverbindungen im Gehäuse der Eingabeeinheit E gehalten. Beim Herausziehen der Tastatur wird diese Verbindung gelöst, so daß in die gleichen Steckverbindungen eine normale Schreibmaschinentastatur eingefügt werden kann. Ergänzend besteht die Möglichkeit, auch beide Tastaturen an der Eingabeeinheit E vorzusehen. In diesem Fall können z.B. am Gehäuse der Eingabeeinheit E Halterungen 30 vorzugsweise unter dem Gehäuse vorgesehen sein, in die die Schreibmaschinentastatur eingefügt werden kann, so daß die beiden Tastaturen schräg hintereinander vor dem Datensichtgerät 12 angeordnet sind.

### Bezugszeichen-Liste (kein Bestandteil der Anmeldungsunterlagen)

- 10: Maschinenfuß
- 10a: Längswand
- 10b: Abdeckung
- 11, 11': Schaltschrank
- 11a, 11b: Segment
- 11c: Versteifungskante
- 11e: Diskettenschacht
- 11f: Tür
- 11g: Aussparung
- 12: Datensichtgerät
- 13: Eingabetastatur
- 14: Schwenkelement
- 15: Schwachstrom führende Bauteile
- 16: Starkstrom führende Bauteile
- 17: Hauptschalter
- 18: Tragelement
- 19: Tragkonstruktion
- 19a: Trägersäule
- 20: Schutzschieber
- 20a: Griff
- 21: Schutzabdeckung
- 22: Warnlampe
- 23: Transportöse
- 24: Kabel für E
- 25: Halteelement
- 26: Kabel für 11
- 27: Stecker
- 28: Luftschacht
- 29: Freiraum
- 30: Halterungen
- b: Breite von 12
- e: Breite von E
- B: Bedienungsplatz
- E: Eingabeeinheit
- F: Formschließeinheit
- S: Spritzgießeinheit
- t: Tiefe von 11
- v-v: vertikale Schwenkachse

## Patentansprüche

1. Kunststoff-Spritzgießmaschine (Spritzgießmaschine) mit einem Maschinenfuß (10), auf dem eine Formschließeinheit (F) und eine Spritzgießeinheit (S) angeordnet sind, mit einem der Spritzgießmaschine räumlich zugeordneten Schaltschrank (11), mit dem eine zumindest Datensichtgerät (12) und Eingabetastatur (13) umfassende Eingabeeinheit (E) in Verbindung steht, die zumindest um eine im wesentlichen vertikale Schwenkachse (v-v) schwenkbar und von einem vor der Spritzgießmaschine liegenden Bedienungsplatz aus zugänglich ist, wobei die Eingabeeinheit (E) in eine Stellung überführbar ist, in der sie die Spritzgießmaschine mit den ihr zugeordneten Elementen im wesentlichen nicht nach vorne überragt, dadurch gekennzeichnet, daß die Eingabeeinheit (E) am Schaltschrank (11) schwenkbar gelagert ist und in der überführten Stellung den Schaltschrank im wesentlichen nicht nach vorne überragt, der seinerseits in wenigestens zwei miteinander verbundene Segmente (11a und 11b) aufgegliedert ist.

2. Spritzgießmaschine nach Anspruch 1, dadurch gekennzeichnet, daß die beiden Segmente (11a, 11b) identische Abmessungen und in der Frontansicht quadratische Gestalt besitzen.

3. Spritzgießmaschine nach Anspruch 1 oder 2, dadurch gekennzeichnet, daß ein erstes Segment (11a) des Schaltschrankes (11) die Schwachstrom führenden Bauteile (15) und ein zweites Segment (11b) des Schaltschrankes (11) die Starkstrom führenden Bauteile (16) aufnimmt, wobei der Hauptschalter (17) für die Spritzgießmaschine zugleich ein unbeabsichtigtes Öffnen des zweiten Segmentes (11b) verhindert, während das erste Segment (11a) über einen bekannten Öffnungsmechanismus zugänglich ist.

4. Spritzgießmaschine nach einem der vorhergehenden Ansprüche, dadurch gekennzeichnet, daß die Schwenkachse (v-v) für die Eingabeeinheit (E) im Bereich von Versteifungselementen bzw. Versteifungskanten (11c) des Schaltschrankes (11) angeordnet ist.

5. Spritzgießmaschine nach einem der vorhergehenden Ansprüche, dadurch gekennzeichnet, daß die Schwenkachse im Bereich einer Ecke des die Schwachstrom führenden Teile beinhaltenden Segments (11a) des Schaltschrankes (11) angeordnet ist.

6. Spritzgießmaschine nach einem der vorhergehenden Ansprüche, dadurch gekennzeichnet, daß der Schaltschrank über Tragelemente (18) freitragend an der bedienungsseitigen Längswand (10a) des Maschinenfußes (10) befestigt ist und daß hinter dem oberen Bereich des Schaltschrankes (11) zwischen Schaltschrank und einer Trägerkonstruktion (19) ein Gefahrenbereiche abdeckender Schutzschieber (20) verfahrbar ist.

7. Spritzgießmaschine nach einem der vorhergehenden Ansprüche, dadurch gekennzeichnet, daß die Schwenkachse (v-v) im Randbereich des Schaltschrankes (11) so angeordnet ist, daß die Eingabeeinheit (E) in einen im Schaltschrank (11) vorgesehenen, durch die Tür (11f) des Schaltschrankes (11) abdeckbaren Freiraum (29) einschwenkbar ist.

8. Spritzgießmaschine nach einem der vorhergehenden Ansprüche, dadurch gekennzeichnet, daß die Segmente (11a, 11b) des Schaltschrankes über einen Luftschacht (28) zur Temperierung mittels einer Temperiereinheit miteinander verbunden sind, der in einer Ansicht von vorne Anschlußmöglichkeiten (Stecker 27) für Peripheriegeräte verdeckt.

9. Spritzgießmaschine nach einem der vorhergehenden Ansprüche, dadurch gekennzeichnet, daß an der Eingabeeinheit (E) eine Halterung für eine Tastatur vorgesehen ist, die einer Schreibmaschinentastatur entspricht.

10. Spritzgießmaschine nach Anspruch 9, dadurch gekennzeichnet, daß die Eingabetastatur über Steckverbindungen mit der Eingabeeinheit verbunden ist und weise durch eine Schreibmaschinentastatur ersetzbar ist oder um eine Schreibmaschinentastatur in Halterungen (30) unter der Eingabeeinheit (E) ergänzbar ist.
